# EUROPÄISCHE PATENTSCHRIFT

(11) **EP 2 562 032 B1**
(45) Veröffentlichungstag und Bekanntmachung des Hinweises auf die Patenterteilung: **04.06.2014**
(21) Anmeldenummer: 12006079.3
(22) Anmeldetag: 27.08.2012
(51) Int. Cl.: B60N 2/28, B60N 2/427

(54) **Haltevorrichtung**
Holding device
Dispositif de retenue

(30) Priorität: 25.08.2011 DE 102011111623
(43) Veröffentlichungstag der Anmeldung: 27.02.2013
(73) Patentinhaber: Emmaljunga Barnvagnsfabrik AB, 28022 Vittsjö (SE)
(72) Erfinder: Persson, Christian, 280 22 Vittsjö (SE)
(74) Vertreter: Bauer, Clemens

(56) Entgegenhaltungen:
- EP-A1- 2 230 125
- WO-A1-2009/062505
- DE-A1- 10 047 790

## Beschreibung

Die vorliegende Erfindung betrifft eine Haltevorrichtung insbesondere zum Halten von Kindersitzen bzw. Babyschalen in Kraftfahrzeugen.

Kindersitze bzw. Babyschalen sind aus dem Stand der Technik hinlänglich bekannt. Sie werden beispielsweise auf dem Beifahrersitz oder auf der Rückbank eines Personenkraftwagens abgestellt und beispielsweise mittels des Gurtsystems des PKW gegen Verlagerung gesichert. Nachteilig bei dieser Befestigung der Kindersitze bzw. Babyschalen ist jedoch, dass das ordnungsgemäße Befestigen des Kindersitzes im Innenraum des Fahrzeuges aufwendig ist, da eine Vielzahl von Handgriffen benötigt werden, und zudem insbesondere bei Verwendung bzw. Benutzung des Sicherheitsgurtsystems des PKW die Fixierung bzw. Befestigung des Kindersitzes bzw. der Babyschale im Fahrzeug unzureichend sein kann. Weiterhin wird bei einem Verkehrsunfall des Fahrzeuges die aus dem Unfall resultierende Beschleunigung, bzw. der Stoß, unzureichend gedämpft oder gar ungedämpft an das Kind, welches im Kindersitz sitzt, weitergeleitet und es besteht eine erhebliche Verletzungsgefahr für das Kind.

Die DE 100 47 790 A1 betrifft einen Kindersitz mit einem Basiselement, dessen Längsachse in Fahrtrichtung positionierbar ist und dazu über eine Kupplungseinrichtung mit der Fahrzeugkarosserie lösbar verbindbar ist.

Die EP 2 230 125 A1 betrifft eine Haltevorrichtung mit einem Rahmen, der über Befestigungselemente mit einem Fahrzeugsitz verbindbar ist und einen Stützbereich aufweist, an dem ein Kindersitz befestigbar ist, wobei Absorberelemente zum Auf fangen der kinetischen Energie vorgesehen sind.

Die WO 2009/ 062 505 A1 betrifft einen Kindersitz für ein Fahrzeug, mit einem deformierbaren Element, wobei der Kindersitz auf dem Fahrzeugsitz festlegbar ist.

Aufgabe der vorliegenden Erfindung ist es also, eine Haltevorrichtung bereitzustellen, die es ermöglicht, einen Kindersitz bzw. eine Babyschale auf einfache Weise und unter Verminderung der Verletzungsgefahr für das Kind in einem Fahrzeug bzw. einem Kraftfahrzeug festzulegen bzw. zu fixieren.

Diese Aufgabe wird gelöst mit einer Haltevorrichtung mit den Merkmalen des unabhängigen Anspruchs 1. Weitere Vorteile und Merkmale der vorliegenden Erfindung ergeben sich aus den abhängigen Ansprüchen.

Erfindungsgemäß umfasst die Haltevorrichtung ein Rahmenelement, einen Schlitten und zumindest ein Absorberelement, wobei das Rahmenelement einen Befestigungsabschnitt und einen Führungsabschnitt aufweist, wobei das Rahmenelement über den Befestigungsabschnitt an einem Kraftfahrzeug festlegbar ist, wobei der Schlitten Eingriffsmittel zum Befestigen eines Kindersitzes bzw. einer Babyschale an dem Schlitten aufweist, wobei der Schlitten im Führungsabschnitt des Rahmenelementes gleitend bzw. verschiebbar bzw. verlagerbar gelagert ist und wobei das Absorberelement derart zwischen dem Rahmenelement und dem Schlitten angeordnet ist, dass eine Verlagerung des Schlittens relativ zum Rahmenelement nur unter Verformung des Absorberelements stattfindet, um Laststöße vom Kraftfahrzeug auf den Kindersitz bzw. die Kinderschale zu dämpfen. Die Haltevorrichtung weist die drei Hauptkomponenten Rahmenelement, Schlitten und Absorberelement auf, wobei das Rahmenelement dazu dient, die Haltevorrichtung am Kraftfahrzeug ortsfest festzulegen bzw. zu befestigen. Zu diesem Zweck weist das Rahmenelement einen Befestigungsabschnitt auf, der eine bevorzugt formschlüssige lösbare Verbindung mit entsprechenden Bereichen am Kraftfahrzeug eingehen kann und auf diese Weise das Rahmenelement am Kraftfahrzeug festlegt. Insbesondere bevorzugt ist es, dass der Befestigungsabschnitt Kräfte in der Hauptbewegungsrichtung, d.h. im Allgemeinen in der Vorwärts- bzw. Rückwärtsfahrtrichtung, des Kraftfahrzeuges an das Rahmenelement überträgt. Von Vorteil ist es, wenn der Befestigungsabschnitt das aus dem Stand der Technik bekannte sogenannte ISO-FIX System aufweist, welches in den dafür am Kraftfahrzeug vorgesehenen Haltebügel bzw. Bolzen oder ähnliche Befestigungssysteme einrastet. Mittels eines Öffnungsmechanismus kann der Befestigungsabschnitt vorteilhaft ausgerastet bzw. gelöst werden, um die Haltevorrichtung aus dem Fahrzeug zu entnehmen. Besonders bevorzugt weist das Rahmenelement zwei Befestigungsabschnitte auf, welche voneinander beabstandet angeordnet sind und jeweils Kräfte in der Bewegungsrichtung des Fahrzeuges bzw. im Wesentlichen parallel zu dieser an das Rahmenelement übertragen. Auf diese Weise können auch Kräfte in Querrichtung, d. h. quer zur Bewegungsrichtung des Fahrzeuges vom Fahrzeug über die Befestigungsabschnitte auf das Rahmenelement übertragen werden. Kräfte, die in Querrichtung auf das Rahmenelement einwirken, treten beispielsweise während der Kurvenfahrt oder einem seitlichen oder einem schrägen Aufprall auf das Fahrzeug auf. Weiterhin weist die Haltevorrichtung erfindungsgemäß einen Schlitten auf, der im Führungsabschnitt des Rahmenelementes gleitend gelagert ist und Eingriffsmittel zum Befestigen eines Kindersitzes bzw. einer Babyschale aufweist. Vorzugsweise ist der Schlitten als im Wesentlichen flächiger Körper ausgebildet, wobei die von der Fläche des Schlittens aufgespannte Ebene im Wesentlichen parallel zur Bewegungsrichtung des Fahrzeuges ausgerichtet ist. Um einen Kindersitz bzw. eine Babyschale an dem Schlitten festzulegen, weist dieser bevorzugt Eingriffsmittel in Form von Aussparungen oder Vorsprüngen auf, an denen es möglich ist, einen Kindersitz bzw. eine Babyschale am Schlitten einzurasten, aufzustecken oder festzuschrauben. Ferner bevorzugt kann es sein, dass an dem Schlitten ein Adapterelement festgelegt ist, welches beispielsweise wannenförmig ausgebildet ist und in welches eine Babyschale bzw. ein (KFZ-)Kindersitz eingesetzt werden kann, wobei dieser von der Wand des Adapterelementes gegen Verlagerung längs und quer zur Hauptbewegungsrichtung des Fahrzeuges gesichert ist und gleichzeitig von Befestigungselementen gegen Verlagerung in vertikaler Richtung relativ zum Schlitten gesichert ist. Mit Vorteil ist die Verbindung zwischen dem Adapterelement und dem Kindersitz auf einfache Weise herstellbar und wieder lösbar, indem beispielsweise ein Klickverschluss eingesetzt wird. Erfindungsgemäß kann der Schlitten in zumindest einer Richtung, insbesondere bevorzugt in der Richtung in der horizontalen Ebene, d.h. der Ebene, in der bevorzugt Längs- und Querkräfte auf das Fahrzeug einwirken, relativ zum Rahmenelement gleiten bzw. sich verlagern. Diese Gleitbewegung bzw. Verlagerung wird durch ein erfindungsgemäß vorgesehenes Absorberelement, welches zwischen dem Rahmenelement und dem Schlitten angeordnet ist und sich sowohl am Rahmenelement als auch am Schlitten abstützt, behindert. Dabei ist es vorgesehen, dass Relativbewegungen des Schlittens zum Rahmenelement nur unter Verformung des Absorberelements stattfinden können, d. h. der Schlitten kann sich relativ zum Rahmenelement nur verlagern, wenn er das Absorberelement plastisch und/oder elastisch verformt. Um diese Verformung des Absorberelements zu erreichen, muss der Schlitten bzw. das Rahmenelement eine bestimmte Arbeit am Absorberelement verrichten, wobei dem Schlitten bzw. dem Rahmenelement dieser Energiebetrag entzogen ist und ein Stoß, der zwischen Schlitten und Rahmenelement stattfindet, entsprechend um diesen Energiebetrag gedämpft ist. Bevorzugt wird die Haltevorrichtung auf die Sitzfläche eines Kraftfahrzeuges aufgelegt und mittels der bevorzugt nach hinten weisenden Befestigungsabschnitte des Rahmenelements am Fahrzeug festgelegt. Weiterhin bevorzugt kann es auch sein, dass das Rahmenelement an seiner den Befestigungsabschnitten gegenüberliegenden Seite weitere Befestigungsmittel aufweist, um das Rahmenelement an der Vorderkante bzw. Vorderfläche des Sitzes des Kraftfahrzeuges festzulegen. Mittels dieser Fixierung der Haltevorrichtung auf der Sitzfläche kann zum Beispiel zu verhindert werden, dass bei einem Auffahrunfall, bei dem das Fahrzeug schlagartig positiv beschleunigt wird, das Rahmenelement und damit die Haltevorrichtung relativ zum Fahrzeug gesehen nach oben und hinten klappt.

Erfindungsgemäß sind die Absorberelemente derart in der Haltevorrichtung angeordnet, dass Laststöße eine Druckspannung erzeugen, welche unter vorwiegender plastischer Verformung des Absorberelements abgebaut wird. Das Absorberelement ist mit anderen Worten also bevorzugt dafür ausgelegt, Kräfte aufzunehmen, die es auf Druck belasten und folglich eine Druckspannung im Material des Absorberelements erzeugen, wobei diese Druckspannung unter plastischer Verformung des Absorberelements abgebaut werden soll. Umgangssprachlich wird ein solches Absorberelement auch "Crash-Element" oder "Pufferelement" genannt. Alternativ kann es auch bevorzugt sein, für geringere Längs- und Querkräfte, die zwischen dem Rahmenelement und dem Schlitten wirken, eine geringe elastische Verformbarkeit des Absorberelements vorzusehen. Weiterhin bevorzugt kann es sein, dass der Schlitten über eine Vielzahl von Absorberelementen gegen Verlagerung relativ zum Rahmenelement gesichert ist, wobei der Schlitten zumindest gegen Verlagerung längs der Bewegungsrichtung des Kraftfahrzeuges durch die Absorberelemente gesichert ist. Insbesondere, wenn Absorberelemente verwendet werden, die hauptsächlich oder ausschließlich auf Druckspannung belastet werden sollen, ist es bevorzugt, an zwei gegenüberliegenden Seiten des Schlittens jeweils Absorberelemente vorzusehen, die eine Verlagerung des Schlittens relativ zum Rahmenelement in jeweils einer Richtung verhindern. Es können bevorzugt mehrere, nebeneinander angeordnete, bzw. parallel geschaltete Absorberelemente an jeweils einer Seite des Schlittens vorgesehen sein. Da die größten Kräfte, die vom Fahrzeug auf das Rahmenelement und vom Rahmenelement auf den Schlitten übertragen werden, in Bewegungsrichtung bzw. parallel zur Bewegungsrichtung des Kraftfahrzeuges erwartet werden, ist es bevorzugt, zumindest die Verlagerung längs dieser Bewegungsrichtung des Kraftfahrzeuges durch Absorberelemente abzudämpfen. Darüber hinaus kann es bevorzugt sein, an den Seiten, also längs der Querrichtung, Absorberelemente vorzunehmen, um beispielsweise im Falle eines Seitenaufpralls eine gedämpfte Kraftübertragung vom Fahrzeug über das Rahmenelement und den Schlitten an den Kindersitz zu erreichen.

Erfindungsgemäß ist ein erstes Absorberelement an dem in Vorwärtsfahrtrichtung des Kraftfahrzeuges weisenden Ende des Schlittens und ein zweites Absorberelement an dem gegenüberliegenden Ende des Schlittens angeordnet. Das in Vorwärtsfahrtrichtung des Kraftfahrzeuges angeordnete Absorberelement nimmt bevorzugt die Kräfte zwischen Schlitten und Rahmenelement auf, die auftreten, wenn das Fahrzeug schlagartig gebremst bzw. verzögert wird und der Schlitten aufgrund seiner Trägheit in Vorwärtsfahrtrichtung des Kraftfahrzeuges gegen das Rahmenelement gepresst wird. Das am nach hinten weisenden Ende des Schlittens zwischen Schlitten und Rahmenelement vorgesehene Absorberelement nimmt bevorzugt die Kräfte bzw. Stöße auf, die zwischen Schlitten und Rahmenelement wirken, wenn das Fahrzeug schlagartig beschleunigt wird und der Schlitten mit dem darauf installierten Kindersitz aufgrund seiner Trägheit diese Beschleunigung nicht im gleichen Maße durchführt.

Es ist besonders bevorzugt, dass das in Vorwärtsfahrtrichtung des Kraftfahrzeuges angeordnete Absorberelement eine Materialdichte Y₁ aufweist, die größer ist, als die Materialdichte Y₂ des am gegenüberliegenden Ende des Schlittens angeordneten Absorberelement. Zweckmäßigerweise ist das Verhältnis der Materialdichte Y₁ zur Materialdichte Y₂ größer 1 ist, zweckmäßigerweise 1,1 bis 5, bevorzugt 1,5 bis 3 und insbesondere bevorzugt etwa 2. Dies ist bevorzugt, da im Falle eines Unfalls des Fahrzeuges in der Vorwärtsrichtung eine höhere Aufprallgeschwindigkeit erwartet wird als in entgegengesetzter Richtung.

Weiterhin ist besonders bevorzugt, dass das in Vorwärtsfahrtrichtung des Kraftfahrzeuges angeordnete Absorberelement eine Materialdicke D₁ längs einer Richtung, die im Wesentlichen der Bewegungsrichtung des Kraftfahrzeuges bzw. Verlagerungsrichtung des Schlittens entspricht, aufweist, und das am gegenüberliegenden Ende des Schlittens angeordnete Absorberelement eine Materialdicke D₂ längs dieser Richtung aufweist, wobei das Verhältnis der Materialdicke D₁ zu Materialdicke D₂ größer 1 ist, zweckmäßigerweise 1,1 bis 5, bevorzugt 1,5 bis 3 und insbesondere bevorzugt 2 beträgt. Es ist bevorzugt, dass das in Vorwärtsfahrtrichtung des Kraftfahrzeuges angeordnete Absorberelement dicker ausgelegt ist, als das nach hinten weisende Absorberelement, da im Falle eines Unfalls des Fahrzeuges in der Vorwärtsrichtung eine höhere Aufprallgeschwindigkeit erwartet wird als in entgegengesetzter Richtung.

Da eine wesentliche Aufgabe des Absorberelementes eine Reduzierung der auf den Kindersitz wirkenden Beschleunigung ist, müssen die Absorberelemente je nach ihrer Anordnung in der Haltevorrichtung bestimmte Dämpfungs- bzw. Abfederungs- bzw. Absorptionswerte erzielen, um entlang verschiedener Richtungen bzw. Vektoren wirkende Beschleunigungen, die das Kraftfahrzeug auf das Rahmenelement überträgt, abzudämpfen. Auf diese Weise kann gezielt die Beschleunigung, die auf den Kindersitz wirkt, auf einen bestimmten Grenzwert reduziert werden. Mit anderen Worten muss das in Vorwärtsfahrtrichtung des Kraftfahrzeuges angeordnete Absorberelement eine höhere kinetische Energie aufnehmen und abfedern können als das am Schlitten hinten liegend angeordnete Absorberelement. Die Materialdicke des Absorberelementes in Richtung des aufzunehmenden Stoßes bzw. der zu verringernden Beschleunigung ist dabei effektiv ein zusätzlicher zur Verfügung stehender Weg für die Beschleunigung bzw. die Verzögerung des Schlittens relativ zum Rahmenelement, wodurch wiederum die auf den Kindersitz wirkende Beschleunigung und bei konstanter Masse auch die wirkende Kraft reduziert werden kann. Es ist üblich, Grenzwerte der Beschleunigung bei Unfällen durch Vielfache der Fallbeschleunigung auszudrücken, beispielsweise als Wert von 10 G, was einer Beschleunigung von ca. 98,2 m/s² entspricht.

Besonders bevorzugt ist es, dass die Absorberelemente derart ausgelegt sind, insbesondere deren Dichte und/oder Dicke derart ausgelegt ist, dass die maximale Beschleunigung der Nutzlast (d. h. des Kindersitzes) zumindest um 5%, bevorzugt zumindest 10% und insbesondere im Bereich von 15% bis 30% geringer ist als die maximale Beschleunigung des Kraftfahrzeuges zum selben Zeitpunkt. Mit anderen Worten soll durch den Einsatz der Absorberelemente erreicht werden, dass der Kindersitz eine Beschleunigung erfährt, deren Maximalwert geringer ist als der Maximalwert der Beschleunigung des Kraftfahrzeuges während des Unfalls. Ein wichtiger Einstellparameter hierfür ist die Materialdichte des Absorberelementes und/oder die Materialdicke des Absorberelementes in Richtung der Bewegungsrichtung des Fahrzeuges bzw. der Aufprallrichtung des Fahrzeuges auf ein Hindernis.

Bevorzugt weist der Schlitten einen ersten Gleitabschnitt auf, der in den Führungsabschnitt des Rahmenelements eingreift, um den Schlitten gegen Verlagerung relativ zum Rahmenelement quer zur Richtung R zu sichern. Der Gleitabschnitt des Schlittens verhindert also bevorzugt eine Verlagerung des Schlittens relativ zum Rahmenelement in alle Richtungen außer in der Richtung, in der sich der Schlitten entlang des Führungsabschnittes des Rahmenelements verlagern können soll, wobei diese Verlagerung bzw. Gleitbewegung wiederum nur unter Verformung der Absorberelemente stattfinden kann. Insbesondere greift der erste Gleitabschnitt des Schlittens formschlüssig in den Führungsabschnitt ein. Bevorzugt kann der Gleitabschnitt des Schlittens als zu einer Seite hin offenes rechtwinklig ausgebildetes Rohr ausgelegt sein, welches den Führungsabschnitt des Rahmenelementes umschließt und auf diese Weise eine Verlagerung des Schlittens relativ zum Rahmenelement in beiden vertikalen Richtungen, also sowohl nach oben als auch nach unten, und in horizontaler Richtung verhindert. Insbesondere bevorzugt ist es, dass der Schlitten zumindest zwei erste Gleitabschnitte aufweist, wobei die Gleitabschnitte an gegenüberliegenden Seiten des Schlittens vorgesehen sind und mit zwei dafür am Rahmenelement vorgesehenen Führungsabschnitten in Eingriff bringbar sind, um den Schlitten in vertikaler Richtung und quer zur Bewegungsrichtung des Fahrzeuges am Rahmenelement festzulegen.

Insbesondere bevorzugt ist es, dass das Absorberelement aus einem geschäumten Kunststoff, bevorzugt aus einem kristallinen Thermoplast, insbesondere bevorzugt expandiertem Polyvinylchlorid (PVC) oder expandiertem Polypropylen gebildet ist. Geschäumte Kunststoffe sind insbesondere bevorzugt für die Verwendung als Absorberelemente, da mittels der beiden Einstellgrößen Materialhärte und Größe der Schaumstoffzellen, die Verformungseigenschaften sowohl im elastischen als auch im plastischen Bereich des Absorberelementes genau an die Bedürfnisse des Einsatzgebietes angepasst werden können. Je kleiner dabei die Größe der Schaumstoffzellen des geschäumten Kunststoffes ist, desto höher ist die Festigkeit und Dichte und desto schwerer lässt sich das Absorberelement verformen. Besonders bevorzugt besteht das Absorberelement aus einem Material mit einem Anteil von 30 bis 75 % PVC und 20 bis 50 % Polyurethan/Polyamid.

In einer insbesondere bevorzugten Ausführungsform sind Aussparungen und/oder Rücksprünge in dem Absorberelement vorgesehen, um ein nicht-stetiges Verformungsverhalten des Absorberelements zu erreichen. Es kann bevorzugt sein, dass bei einem Unfall des Kraftfahrzeuges das Absorberelement in einer gestuften Weise, also zunächst mit einer stärkeren Verformung bei vergleichsweise geringerer Kraft und anschließend mit geringerer Verformung bei höherer Kraft, auf die Verlagerung des Schlittens relativ zum Rahmenelement reagiert und somit ein nicht stetiges Verformungsverhalten zeigt. So kann es gewünscht sein, dass durch Aussparungen und/oder Rücksprünge bereichsweise das Material des Absorberelementes geschwächt wird, d.h. der zur Lastaufnahme vorgesehene Querschnitt des Absorberelementes bereichsweise verringert ist, so dass in diesen Bereichen die Spannung ansteigt und bei gleichbleibender Kraft von außen auf das Absorberelement zunächst eine höhere Verformung bzw. Dehnung des Absorberelementes stattfindet. Die Verformung dieser Bereiche des Absorberelementes, die mit Aussparungen und/oder Rücksprüngen geschwächt bzw. deren Querschnitt verringert wurde, findet so lange statt, bis die beiden gegenüberliegenden Flanken der Aussparungen oder Rücksprünge aufeinander aufliegen und anschließend das Absorberelement mit seinem gesamten Querschnitt quer zur Kraftrichtung bzw. quer zur Last- oder Stoßrichtung die Kraft, die auf das Absorberelement wirkt, aufnimmt. Es kann weiterhin auch bevorzugt sein, am Absorberelement mehrere Schichten verschiedenen Materials vorzusehen, so beispielsweise eine zunächst stärker elastisch verformbare Schicht und anschließend eine härtere, dafür im Wesentlichen nur plastisch verformbare Schicht. Mittels dieser Auslegungsvariante kann ebenfalls ein nicht stetiges Verformungsverhalten erreicht werden, indem zunächst bei einem Laststoß nur der elastisch verformbare Materialbereich des Absorberelementes verformt wird und erst bei weiterem Ansteigen der Kraft bzw. der Beschleunigung des Schlittens gegenüber dem Rahmenelement auch der plastisch verformbare Bereich des Absorberelementes verformt wird. Es kann somit erreicht werden, dass das Absorberelement nicht unter den normalen Betriebsbedingungen, in denen ebenfalls Beschleunigung und Kräfte zwischen Schlitten und Rahmenelement wirken, unnötig belastet und plastisch verformt wird. Durch eine bevorzugte elastisch verformbare Schicht, beispielsweise ein Siloxan oder Kautschuk, kann die Lebensdauer des Absorberelements deutlich gesteigert werden. Es versteht sich, dass auch ein Absorberelement mit sowohl einer elastischen Schicht als auch Aussparungen und/oder Rücksprüngen und einem mehrstufigen, nicht stetigen Verformungsverhalten vorgesehen sein kann.

Es kann weiterhin bevorzugt sein, dass der Schlitten ein Schlittenelement aufweist, welches an einem dafür vorgesehenen zweiten Führungsabschnitt des Schlittens gegen Verlagerung zum Schlitten quer zur einer Querrichtung gesichert ist, wobei die Eingriffsmittel am Schlittenelement vorgesehen sind. Es kann bevorzugt sein, den Kindersitz bzw. die Babyschale auch quer zur Bewegungsrichtung des Fahrzeuges stoßgedämpft zu lagern. Zu diesem Zweck weist der Schlitten ein Schlittenelement auf, welches relativ zum Schlitten in Querrichtung verlagerbar ist und quer zur Querrichtung Q am Schlitten gesichert ist. Wie zwischen den entsprechenden Enden des Schlittens und dem Rahmenelement sind auch zwischen den Enden des Schlittenelementes und dem Schlitten Absorberelemente vorgesehen, die eine Verlagerungsbewegung des Schlittenelementes relativ zum Schlitten quer zur Bewegungsrichtung des Fahrzeuges bzw. entlang der Richtung Q verhindern. Bevorzugt kann sich daher das Schlittenelement relativ zum Schlitten nur unter Verformung dieser Absorberelemente verlagern. Da im Allgemeinen erwartet wird, dass die Kräfte, die bei einem Quer- bzw. Seitenaufprall zwischen Fahrzeug und Kindersitz wirken, geringer sind als bei einem Frontalaufprall, ist es bevorzugt, dass die zwischen dem Schlitten und dem Schlittenelement angeordnete Absorberelemente eine geringere Materialstärke quer zur Bewegungsrichtung des Fahrzeuges bzw. längs der Querrichtung bzw. in Aufprallrichtung eines Seitenaufpralls aufweisen als die längs der Bewegungsrichtung angeordneten Absorberelemente.

Mit Vorteil sind die Eingriffsmittel dafür ausgelegt, einen Kindersitz bzw. eine Babyschale formschlüssig oder kraftschlüssig am Schlitten oder am Schlittenelement festzulegen, wobei bevorzugt ein Formschluss durch Einrasten herstellbar ist. Die Eingriffsmittel, welche am Schlitten bzw. wenn dieses vorhanden ist, am Schlittenelement vorgesehen sind, dienen dazu, den Kindersitz oder die Babyschale am Schlitten bzw. am Schlittenelement festzulegen, damit sich der Kindersitz bzw. die Babyschale nur unter gleichzeitiger Bewegung des Schlittens bzw. des Schlittenelementes relativ zum Rahmenelement verlagern kann, wobei wiederum die Absorberelemente verformt werden. Da es insbesondere bevorzugt sein kann, dass die Haltevorrichtung im Fahrzeug eingebaut verbleibt und der Kindersitz lediglich durch Einsetzen und Einklicken an der Haltevorrichtung verrastet bzw. festgelegt wird, sollen die Eingriffsmittel dafür ausgelegt sein, diese Verbindung auf besonders einfache Weise herzustellen. Es bietet sich eine formschlüssige Verbindung an, bei welcher beispielsweise mehrere vertikal von der Haltevorrichtung nach oben abstehende rohrähnliche Abschnitte dazu dienen, zylinderförmige oder zylinderähnliche Geometrien bzw. Vorsprünge am Kindersitz bzw. der Babyschale aufzunehmen und auf diese Weise den Kindersitz bzw. die Babyschale gegen Verlagerung in der horizontalen Ebene relativ zum Schlitten bzw. zum Schlittenelement zu sichern. Es können dabei weitere Eingriffsmittel vorgesehen sein, welche den Kindersitz bzw. die Babyschale auch gegen vertikale Verlagerung relativ zur Haltevorrichtung sichern, so beispielsweise ein Haken bzw. Widerhaken, welcher in einer entsprechenden Aussparung am Schlittenelement bzw. Schlitten einklickt bzw. einrastet. Weiterhin kann es bevorzugt sein, dass der Kindersitz bzw. die Babyschale mittels eines Schienensystems auf den Schlitten bzw. das Schlittenelement aufgesteckt wird und wiederum durch Verrastung oder beispielsweise durch kraftschlüssige Festlegung durch Schraubenelemente festgelegt ist. Insbesondere bevorzugt kann es sein, dass auf den Schlitten bzw. das Schlittenelement ein weiteres Bauteil, welches insbesondere zur Aufnahme einer Babyschale bzw. eines Kindersitzes geeignet ist, aufgeschraubt bzw. in stoffschlüssiger nicht lösbarer Verbindung befestigt ist. Dieses zusätzliche Adapterelement kann insbesondere mehrere vertikale Wände aufweisen, welche den Kindersitz bzw. die Babyschale gegen Verlagerung in der horizontalen Ebene relativ zum Adapterelement und relativ zum Schlitten bzw. zum Schlittenelement sichern, wobei durch das Adapterelement eine höhere Stabilität für die Festlegung des Kindersitz bzw. der Babyschale auf dem Schlitten bzw. dem Schlittenelement gewährleistet ist.

Weitere Vorteile und Merkmale ergeben sich aus der nachfolgenden Beschreibung einer bevorzugten Ausführungsform der erfindungsgemäßen Haltevorrichtung mit Bezug auf die beigefügten Figuren. Einzelne Merkmale der gezeigten Ausführungsformen können im Rahmen der Erfindung miteinander kombiniert werden. Es zeigen:
- Fig. 1: eine Draufsicht einer bevorzugten Ausführungsform der erfindungsgemäßen Haltevorrichtung,
- Fig. 2: eine Schnittansicht einer bevorzugten Ausführungsform der erfindungsgemäßen Haltevorrichtung, und
- Fig. 3: eine Draufsicht einer bevorzugten Ausführungsform der Haltevorrichtung mit Schlittenelement

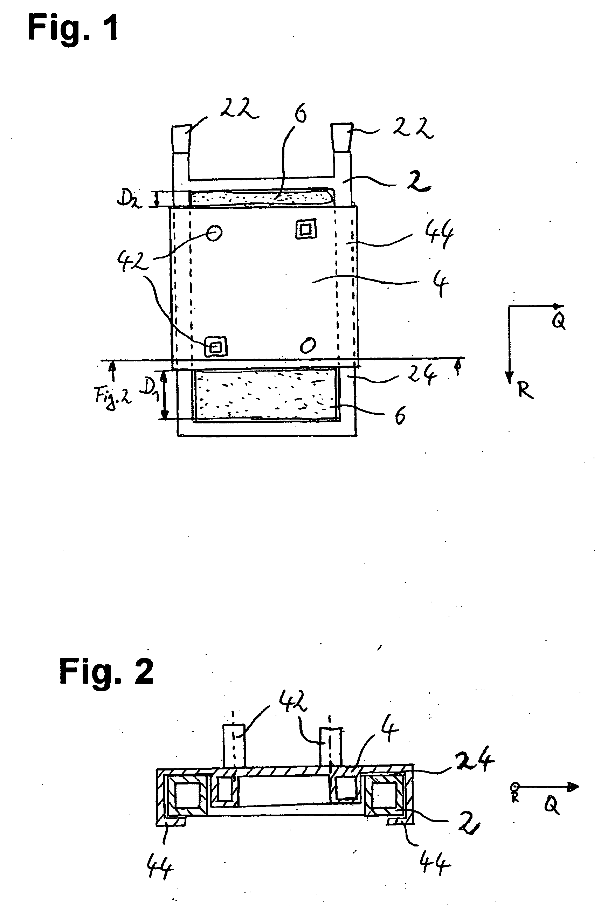

**Fig. 1** zeigt eine Draufsicht auf eine bevorzugte Ausführungsform der erfindungsgemäßen Haltevorrichtung, wobei ein Rahmenelement 2, ein Schlitten 4 und ein Absorberelement 6 gezeigt sind. Das Rahmenelement 2 ist als bevorzugt rechteckiger Rahmen, beispielsweise aus Metall-, vorzugsweise Aluminiumprofilen oder einem Faserverbundwerkstoff, ausgebildet, wobei zwei der Längsstreben des Rahmens sich im Wesentlichen entlang der Bewegungsrichtung R erstrecken und an ihrem hinteren Ende, d.h. in der Figur oben gezeigt, einen Befestigungsabschnitt 22 aufweisen. Weiterhin weist das Rahmenelement 2 zwei Führungsabschnitte 24 auf, in denen der Schlitten 4 mit seinem Gleitabschnitt 44 gleitend am Rahmenelement 22 gelagert ist. Die Gleitbewegung des Schlittens 4 relativ zum Rahmenelement 2 findet dabei längs bzw. parallel zur Richtung R statt, wobei der Schlitten 4 gegen Verlagerung quer zur Richtung R und in vertikaler Richtung, also aus der Bildebene heraus oder hinein relativ zum Rahmenelement 2 gesichert ist, sich also in diesen Richtungen nicht relativ zum Rahmenelement 2 verlagern kann. Als Vertikalrichtung wird die Richtung senkrecht zu der von den Richtungen R und Q aufgespannten Ebene bezeichnet. Ist die Haltevorrichtung im Fahrzeug montiert, so entspricht die Richtung R im Wesentlichen der Vorwärtsfahrtrichtung des Kraftfahrzeuges und die Richtung Q entspricht der quer zur Bewegungsrichtung des Fahrzeuges liegenden Richtung. Zwischen den Querstreben des Rahmenelementes 2 und dem Schlitten 4 ist je ein Absorberelement 6 angeordnet, wobei sich das Absorberelement 6 an dafür vorgesehenen Geometrien des Rahmenelements 2 und des Schlittens 4 abstützt und somit verhindert, dass sich der Schlitten 4 relativ zum Rahmenelement 2 gleitend verlagert. Um eine Verlagerung des Absorberelementes 6 in vertikaler Richtung zu verhindern, kann das Absorberelement 6 in den Zwischenraum zwischen Rahmenelement 2 und Schlitten 4 eingeklebt sein oder beispielsweise mittels geeigneter Vorsprünge, die in den Zwischenraum hineinragen, form- oder kraftschlüssig bevorzugt am Rahmenelement 2 festgelegt sein. Das Absorberelement 6 selbst ist vorzugsweise als rechteckiger Block bzw. quaderförmig ausgebildet, wobei insbesondere bevorzugt ein thermoplastischer Kunststoff, beispielsweise expandiertes Polypropylen zum Einsatz kommt. Weiterhin bevorzugt kann auch ein geschäumter Kunststoff zum Einsatz kommen. Der Schlitten 4 weist Eingriffsmittel 42 auf, wobei diese insbesondere bevorzugt als Vorsprünge, beispielsweise zylinderförmige Rohrabschnitte, oder als Rücksprünge bzw. Aussparungen ausgebildet sind, in denen beispielsweise Schrauben oder Haken des Kindersitzes bzw. der Babyschale (nicht gezeigt) eingreifen können, um diese am Schlitten 4 festzulegen. Die in der Figur dargestellte Ausführungsform der Haltevorrichtung ermöglicht bei einem Frontalunfall bzw. bei einem Auffahrunfall eine Dämpfung des Stoßes bzw. der Beschleunigung, die vom Fahrzeug über die Befestigungsabschnitte 22 und den Rahmen 2 auf den Schlitten 4 und den an diesem befestigten Kindersitz übertragen werden, indem bei plötzlicher Beschleunigung des Rahmenelements 2 der Schlitten 4 nicht in gleicher Weise beschleunigt oder verzögert wird, sondern sich relativ zum Rahmenelement unter Verformung der Absorberelemente 6 bzw. eines der Absorberelemente 6 relativ zum Rahmenelement 2 verlagert. Auf diese Weise können insbesondere Lastspitzen- bzw. Beschleunigungsspitzenwerte, die vom Fahrzeug auf das Kind im Kindersitz übertragen werden, vermindert werden. Weiterhin bevorzugt ist es, dass das in Vorwärtsrichtung angeordnete Absorberelement 6 (in der Figur das untere Absorberelement 6) eine Dicke D₁ aufweist und das an der Hinterseite des Schlittens 4 (in der Figur oben gezeigt) angeordnete Absorberelement 6 eine Dicke D₂ aufweist. Es ist dabei die Dicke D₁ bevorzugt größer als die Dicke D₂, so dass bei einem Frontalaufprall des Fahrzeuges auf ein Hindernis bzw. bei einem Frontalunfall die Verformungsweglänge des betroffenen vorderen Absorberelementes mit der Dicke D₁ groß genug ist, um die bei einem Frontalaufprall zu erwartenden, hohen Beschleunigungen aufnehmen bzw. abdämpfen zu können. Es ist zu erwarten, dass bei einem Heckaufprall eines Hindernisses auf das Fahrzeug geringere Beschleunigungen auf das Rahmenelement 2 übertragen werden als bei einem Frontalaufprall und entsprechend die Dicke D₂ des hinten angeordneten Absorberelements 6 geringer gewählt werden kann als die Dicke D₁ des vorn angeordneten Absorberelements 6.

**Fig. 2** zeigt eine Schnittansicht einer bevorzugten Ausführungsform der erfindungsgemäßen Haltevorrichtung entlang der bereits in Figur 1 gezeigten Schnittlinie. Dabei ist das Rahmenelement 2 mit seiner Profilform und der Schlitten 4 mit seinem Gleitbereich 44 zu erkennen. Bevorzugt umschließt der Gleitbereich 44 des Schlittens 4 den Führungsbereich 24 des Rahmenelements 2 zumindest bereichsweise bevorzugt an zumindest drei Außenflächen des Führungsbereiches 24 des Rahmenelements 2. Durch diese Auslegung ist der Schlitten 4 bevorzugt gegen Verlagerung in Richtung Q und in vertikaler Richtung relativ zum Rahmenelement 2 gesichert. Weiterhin ist auch erkennbar, dass der Schlitten 4 einen Profilrahmen aufweist, der zum Einen die allgemeine Stabilität des Schlittens 4 erhöht und die Abstützfläche für das (nicht gezeigte) Absorberelement 6 am Schlitten 4 darstellt. Der Schlitten 4 weist weiterhin zwei Eingriffsmittel 42 auf, wobei diese (wie in der Figur dargestellt) bevorzugt als Vorsprünge ausgebildet sind, auf welche der Kindersitz bzw. die Babyschale aufgesteckt werden kann. Nicht in der Figur gezeigt sind weitere Eingriffsmittel 42, die als Aussparungen ausgebildet werden können, in welche Verrast- oder Eingriffsmittel des Kindersitzes bzw. der Babyschale eingreifen. Anstatt der rechteckigen Profilform des Rahmenelements 2 und des Schlittens 4 können bevorzugt auch kreisrunde Querschnitte oder beispielsweise U-förmige oder I-förmige Trägerprofile verwendet werden. Entscheidend bei der Lagerung des Schlittens 4 am Rahmenelement 2 in dessen Führungsbereich 24 ist lediglich die schienenartige Führung bzw. die Führung mittels einer Hinterschneidung des Gleitbereiches 44 des Schlittens 4, in welchem der Führungsabschnitt 24 des Rahmenelements 2 angeordnet ist.

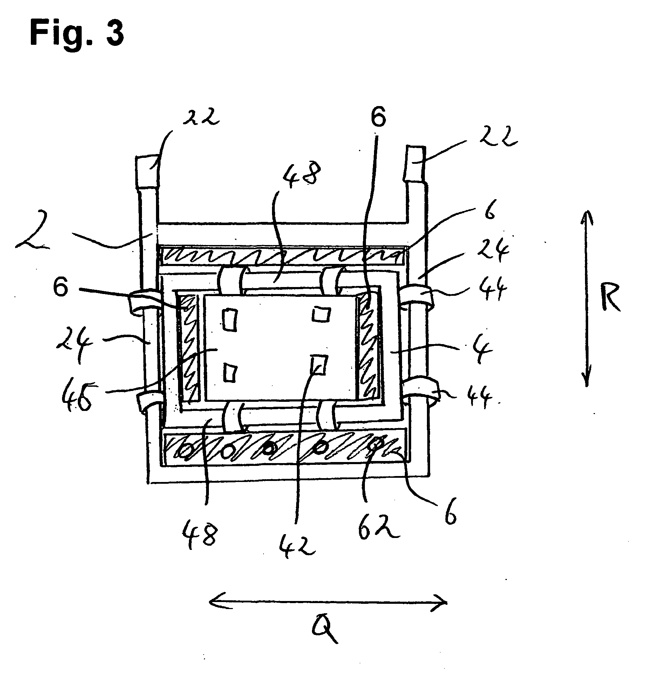

In **Fig. 3** ist eine weitere bevorzugte Ausführungsform der erfindungsgemäßen Haltevorrichtung gezeigt, wobei der Schlitten 4 ein Schlittenelement 46 umfasst. Das Schlittenelement 46 weist Gleitabschnitte auf, die in den bevorzugt zwei Führungsbereichen 48 des Schlittens 4 eingreifen und auf diese Weise das Schlittenelement 46 gegen Verlagerung relativ zum Schlitten 4, quer zur Richtung Q sichern. Zwischen dem Schlittenelement 46 und dem Schlitten 4 ist bevorzugt jeweils zu beiden Seiten des Schlittenelements 46 je ein Absorberelement 6 angeordnet, welches eine Verlagerung des Schlittenelements 46 relativ zum Schlitten 4 entlang der Querrichtung Q behindert, bzw. verhindert. Das Schlittenelement 46 kann sich folglich nur unter Verformung eines dieser beiden Absorberelemente 6 relativ zum Schlitten 4 verlagern. Erfindungsgemäß ist der Schlitten 4 über Gleitabschnitte 44 am Rahmenelement 2 gleitend gelagert, wobei an seinen Enden in Bewegungsrichtung R je ein Absorberelement 6 diese Gleitbewegung relativ zum Rahmenelement 2 behindert. Wie in der Figur gezeigt, können vier Gleitabschnitte 44 am Schlitten 4 vorgesehen sein, die den Schlitten 4 gegen Verlagerung quer zur Bewegungsrichtung R sichern.

### Bezugszeichenliste:

- 2: Rahmenelement
- 4: Schlitten
- 6: Absorberelement
- 22: Befestigungsabschnitt
- 24: Führungsabschnitt
- 42: Eingriffsmittel
- 44: Gleitabschnitt
- 46: Schlittenelement
- 48: zweiter Führungsabschnitt
- 62: Aussparung / Rücksprung

## Patentansprüche

1. Haltevorrichtung, insbesondere zum Halten von Kindersitzen bzw. Babyschalen in Kraftfahrzeugen, umfassend ein Rahmenelement (2), einen Schlitten (4) und zumindest zwei Absorberelemente (6),
wobei das Rahmenelement (2) einen Befestigungsabschnitt (22) und einen Führungsabschnitt (24) aufweist,
wobei das Rahmenelement (2) über den Befestigungsabschnitt (22) an einem Kraftfahrzeug festlegbar ist,
wobei der Schlitten (4) Eingriffsmittel (42) zum Befestigen eines Kindersitzes bzw. einer Babyschale an dem Schlitten (4) aufweist,
wobei der Schlitten (4) im Führungsabschnitt (24) des Rahmenelements (2) in Verlagerungsrichtung verschiebbar gelagert ist, und
wobei die Absorberelemente (6) derart zwischen dem Rahmenelement (2) und dem Schlitten (4) angeordnet sind, dass eine Verlagerung des Schlittens (4) relativ zum Rahmenelement (2) nur unter Verformung eines der Absorberelemente (6) stattfindet, um Laststöße vom Kraftfahrzeug auf den Kindersitz bzw. die Babyschale zu dämpfen,
**dadurch gekennzeichnet,**
**dass** die Absorberelemente (6) derart in der Haltevorrichtung angeordnet sind, dass Laststöße eine Druckspannung erzeugen, welche unter vorwiegend plastischer Verformung der Absorberelemente (6) abgebaut wird, wobei in Verlagerungsrichtung des Schlittens (4) ein der zumindest zwei Absorberelemente (6) an einem Ende des Schlittens (4) angeordnet, und das andere der zumindest zwei Absorberelemente (6) am gegenüberliegenden Ende des Schlittens (4) angeordnet ist.

2. Haltevorrichtung nach Anspruch 1,
wobei der Schlitten (4) über eine Vielzahl von Absorberelementen (6) gegen Verlagerung relativ zum Rahmenelement (2) gesichert ist,
wobei der Schlitten (4) durch die Absorberelemente (6) zumindest gegen Verlagerung längs der Bewegungsrichtung des Kraftfahrzeuges gesichert ist.

3. Haltevorrichtung nach einem der vorhergehenden Ansprüche,
wobei das in Vorwärtsfahrtrichtung des Kraftfahrzeuges angeordnete Absorberelement (6) eine Materlaldichte (Y₁) und das am gegenüberliegenden Ende des Schlittens (4) angeordnete Absorberelement (6) eine Materialdichte Y₂ aufweist, wobei das Verhältnis der Materialdichte (Y₁) zur Materialdichte (Y₂) größer 1 ist, zweckmäßigerweise 1,1 bis 5, bevorzugt 1,5 bis 3 und insbesondere bevorzugt etwa 2 beträgt.

4. Haltevorrichtung nach einem der vorhergehenden Ansprüche,
wobei der Schlitten (4) einen ersten Gleitabschnitt (44) aufweist, der in den Führungsabschnitt (24) des Rahmenelements (2) eingreift, um den Schlitten (4) gegen Verlagerung relativ zum Rahmenelement (2) quer zur Richtung (R) zu sichern.

5. Haltevorrichtung nach einem der vorhergehenden Ansprüche,
wobei die Absorberelemente (6) aus einem geschäumten Kunststoff, bevorzugt aus einem teilkristallinen Thermoplast, insbesondere bevorzugt expandiertem Polyvinylchlorid gebildet ist.

6. Haltevorrichtung nach einem der vorhergehenden Ansprüche,
wobei Aussparungen (62) und/oder Rücksprünge (62) in dem Absorberelement (6) vorgesehen sind, um ein nicht-stetiges Verformungsverhalten des Absorberelements (6) zu erreichen.

7. Haltevorrichtung nach einem der vorhergehenden Ansprüche,
wobei der Schlitten (4) ein Schlittenelement (46) aufweist, welches an einem dafür vorgesehenen zweiten Führungsabschnitt (46) des Schlittens (4) gegen Verlagerung relativ zum Schlitten (4) quer zu einer Richtung (Q) gesichert ist, wobei die Eingriffsmittel (42) am Schlittenelement (46) vorgesehen sind.

8. Haltevorrichtung nach Anspruch 7,
wobei die Eingriffsmittel (42) ausgelegt sind, einen Kindersitz oder eine Baby"schale formschlüssig und/oder kraftschlüssig am Schlitten (4) oder am Schlittenelement (46) festzulegen,
wobei bevorzugt ein Formschluss durch Einrasten herstellbar ist.

## Claims

1. Holding device, in particular for holding child seats and baby seats in vehicles, comprising a frame element (2), a sled (4) and at least two absorber elements (6),
wherein the frame element (2) has a mounting portion (22) and a guiding portion (24),
wherein the frame element (2) is fixable to a vehicle by the mounting portion (22),
wherein the sled (4) has engagement means (42) for fixing a child seat or baby seat, respectively, to the sled (4),
wherein the sled (4) is displaceably supported in a displacement direction in the guiding portion (24) of the frame element (2), and
wherein the absorber elements (6) are arranged in such a manner between the frame element (2) and the sled (4), that a displacement of the sled (4) relative to the frame element (2) occurs only with the deformation of one of the absorber element (6), in order to absorb load surges from the vehicle to the child seat or baby seat, respectively,
**characterized in that**
the absorber elements (6) are arranged in such a manner in the holding device, that load surges generate a compression stress, which is reduced under predominantly plastically deformation of the absorber elements (6),
wherein one of the at least two absorber elements (6) is arranged in displacement direction of the sled (4) at an end of the sled (4), and the other one of the at least two absorber elements (6) is arranged at the opposite end of the sled (4).

2. Holding device according to claim 1, wherein the sled (4) is secured against displacement relative to the frame element (2) by a plurality of absorber elements (6), wherein the sled (4) is secured at least against displacement longitudinally to the moving direction of the vehicle by the absorber elements (6),

3. Holding device according to one of the preceding claims, wherein the absorber element (6) oriented in forward driving direction of the vehicle has a material density (Y₁) and the absorber element (6) arranged at the opposite end of the sled (4) has a material density (Y₂), wherein the relation of the material density (Y₁) to the material density (Y₂) is more than 1, preferably 1.1 to 5, more preferably 1.5 to 3, and most preferably approximately 2.

4. Holding device according to one of the preceding claims, wherein the sled (4) has a first slide portion (44), which engages the guiding portion (24) of the frame element (2) to secure the sled (4) against displacement relative to the frame element (2) transversal to the direction (R).

5. Holding device according to one of the preceding claims, wherein the absorber elements (6) are formed by a foamed plastic material, preferably by a partially crystalline thermoplastic material, in particular preferably by expanded polyvinyl chloride.

6. Holding device according to one of the preceding claims, wherein openings (62) and/or recesses (62) are provided in the absorber element (6) in order to attain a non-continuous deformation characteristic of the absorber element (6).

7. Holding device according to one of the preceding claims, wherein the sled (4) has a sled element (46), which is secured at a second guiding portion (46) provided therefore against displacement relative to the sled (4) transversal to a direction (Q), wherein the engagement means (42) are provided at the sled element (46).

8. Holding device according to claim 7, wherein the engagement means (42) are configured to fix a child seat or baby seat form-fit and/or force-fit to the sled (84) or the sled element (46), wherein preferably a form-fit is obtainable by latching.

## Revendications

1. Dispositif de retenue, en particulier pour retenir des sièges d'enfants ou des coques porte-bébé dans des véhicules automobiles, comprenant un élément de cadre (2), un chariot (4) et au moins deux éléments absorbeurs (6),
dans lequel l'élément de cadre (2) comprend un tronçon de fixation (22) et un tronçon de guidage (24),
dans lequel l'élément de cadre (2) est susceptible d'être immobilisé dans un véhicule automobile au moyen du tronçon de fixation (22),
dans lequel le chariot (4) comprend des moyens d'engagement (42) pour fixer un siège d'enfant ou une coque porte-bébé sur le chariot (4),
dans lequel le chariot (4) est monté en translation dans le tronçon de guidage (24) de l'élément de cadre (2) en direction de déplacement, et
dans lequel les éléments absorbeurs (6) sont agencés entre l'élément de cadre (2) et le chariot (4) de telle manière qu'un déplacement du chariot (4) par rapport à l'élément de cadre (2) se produit uniquement avec déformation de l'un des éléments absorbeurs (6), afin d'axnortir des charges par à-coups du véhicule automobile vers le siège d'enfant ou la coque porte-bébé,
**caractérisé en ce que** les éléments absorbeurs (6) sont agencés dans le dispositif de retenue de telle façon que des charges par à-coups engendrent une contrainte de compression qui est dégradée principalement sous déformation plastique des éléments absorbeurs (6),
et l'un desdits au moins deux éléments absorbeurs (6) est agencé, en direction de déplacement du chariot (4), à une extrémité du chariot (4),
et l'autre desdits au moins deux éléments absorbeurs (6) est agencé à l'extrémité opposée du chariot (4).

2. Dispositif de retenue selon la revendication 1,
dans lequel le chariot (4) est bloqué à l'encontre d'un déplacement par rapport à l'élément de cadre (2) au moyen d'une pluralité d'éléments absorbeurs (6), et
dans lequel le chariot (4) est bloqué par les éléments absorbeurs (6) au moins à l'encontre d'un déplacement le long de la direction de mouvement du véhicule automobile.

3. Dispositif de retenue selon l'une des revendications précédentes, dans lequel l'élément absorbeur (6) agencé dans la direction de circulation du véhicule automobile en marche avant, présente une densité de matériau (γ1), et l'élément absorbeur (6) agencé à l'extrémité opposée du chariot (4) présente une densité de matériau (γ2), telles que le rapport de la densité de matériau (γ1) sur la densité de matériau (γ2) est supérieur à 1, judicieusement 1,1 à 5, de préférence 1,5 à 3, et de manière particulièrement préférée environ 2.

4. Dispositif de retenue selon l'une des revendications précédentes, dans lequel le chariot (4) comprend un premier tronçon coulissant (44) qui s'engage dans le tronçon de guidage (24) de l'élément de cadre (2) afin de bloquer le chariot (4) à l'encontre d'un déplacement par rapport à l'élément de cadre (2) transversalement à la direction (R).

5. Dispositif de retenue selon l'une des revendications précédentes, dans lequel les éléments absorbeurs (6) sont réalisés en une matière plastique en mousse, de préférence une matière thermoplastique partiellement cristalline, et en particulier de préférence en chlorure de polyvinyle expansé.

6. Dispositif de retenue selon l'une des revendications précédentes, dans lequel des échancrures (62) et/ou des ressauts (62) sont prévu(e)s dans l'élément absorbeur (6), afin d'atteindre un comportement de déformation non constant de l'élément absorbeur (6).

7. Dispositif de retenue selon l'une des revendications précédentes, dans lequel le chariot (4) comprend un élément de chariot (46) qui est bloqué sur un second tronçon de guidage (46) du chariot (4), prévu à cet effet, à l'encontre d'un déplacement par rapport au chariot (4) transversalement à une direction (Q), dans lequel les moyens d'engagement (42) sont prévus sur l'élément de chariot (46).

8. Dispositif de retenue selon la revendication 7,
dans lequel les moyens d'engagement (42) sont conçus pour immobiliser un siège d'enfant ou une coque porte-bébé par coopération de formes et/ou par coopération de forces sur le chariot (4) ou sur l'élément de chariot (48),
dans lequel une coopération de formes est de préférence réalisable par un enclenchement.
